Europäisches Patentamt

European Patent Office

Office européen des brevets

(19)

(11) Publication number: **0 344 841**
**A2**

(12) **EUROPEAN PATENT APPLICATION**

(21) Application number: 89201325.1

(22) Date of filing: 23.05.89

(51) Int. Cl.⁴: **C08F 222/00**

(30) Priority: 31.05.88 US 200381

(43) Date of publication of application:
06.12.89 Bulletin 89/49

(84) Designated Contracting States:
AT BE CH DE ES FR GB GR IT LI LU NL SE

(71) Applicant: CALGON CORPORATION
Route 60-Campbell's Run Road
Robinson Township Pennsylvania 15205(US)

(72) Inventor: Chen, Shih-Ruey T.
114 Firth Drive
Coraopolis, PA 15108(US)
Inventor: Vaughan, Craig W.
Box 8 Black's Woods Road
Freedom, PA 15042(US)

(74) Representative: Hesketh, Alan, Dr. et al
European Patent Department Merck & Co.,
Inc. Terlings Park Eastwick Road
Harlow Essex, CM20 2QR(GB)

(54) Process for preparing quaternary maleic anhydride polymers.

(57) This invention is directed to a solution polymerization process for manufacturing maleic anhydride/quaternary ammonium-type polymers.

EP 0 344 841 A2

# PROCESS FOR PREPARING QUATERNARY MALEIC ANHYDRIDE POLYMERS

## BACKGROUND OF THE INVENTION

U.S. Pat. No. 3,912,693 discloses a photopolymerization method for preparing diallyl quaternary ammonium/maleic acid copolymers.

EPO Pat. Appln. No. 84102890.5 discloses copolymers of maleic acid and an adduct of an oxyalkylene and allyl alcohol, and the use thereof for scale inhibition.

U.S. Pat. No. 4,297,237 discloses the use of polymaleic anhydride and polyphosphates as corrosion inhibitors, and U.S. Pat. Nos. 3,810,834; 3,963,363 and 4,089,796 disclose methods of treating the water of an aqueous system with hydrolyzed polymaleic anhydride to inhibit scale formation.

U.S. Pat. Nos. 2,723,956; 3,289,734; 3,292,152; 3,578,589 and 3,715,307 relate to the use of polymaleic anhydride and copolymers thereof as scale control agents.

U.S. Pat. No. 3,965,027 discloses the use of certain amine adducts of polymaleic anhydride as scale and corrosion inhibitors.

However, none of the prior art references described above in any way disclose or suggest the instant process for manufacturing quaternary ammonium/maleic acid-type polymers.

This invention relates to dimethyldiallyl ammonium chloride (DMDAAC)/maleic acid(MA)type polymers and to a solution polymerization process for preparing these polymers. DMDAAC-type polyampholytes, particularly those containing maleic acid, are difficult to prepare via solution polymerization due to the slow rate at which the monomers, particularly maleic acid, react. For this reason, only photopolymerization processes are known in the art.

U.S. Pat. 3,912,693 describes the preparation of MA/DMDAAC copolymers via a photopolymerization technique. In examples 45 and 46 of the '693 patent, MA/DMDAAC copolymers were prepared at an 87-98% initial monomer concentration using maleic anhydride and a dry DMDAAC monomer. A slurry consisting of the monomers in water, 4-5 cms thick, was placed in a polyethylene bag and irradiated for 20-48 hours using a fluorescent light. In example 46, a sensitizer was added to the monomer mix to reduce the polymerization time to 20 hours.

The inventors have found that the photopolymerization process of the '693 patent generally does not provide high yields, particularly with respect to the maleic acid component of the polymers. This process therefore tends to produce DMDAAC-rich polymers. Additionally, the low conversion rate of maleic acid tends to limit the MA/DMDAAC mole ratios obtainable via the '693 photo-polymerization process. These disadvantages are overcome by the instant solution polymerization process.

## DETAILED DESCRIPTION OF THE INVENTION

The instant invention is directed to a solution polymerization process for preparing quaternary ammonium/ethylenically unsaturated dibasic carboxylic acid polymers comprising the steps of:

A) preparing an aqueous monomer mix which comprises a) an ethylenically unsaturated dibasic carboxylic acid or anhydride, preferably maleic acid or anhydride(MA), and b) at least one quaternary dialkyldiallyl ammonium monomer, preferably dimethyldiallyl ammonium chloride (DMDAAC) or a homologue thereof, wherein the mole ratio of a):b) ranges from about 1:5 to about 5:1, preferably from about 1:2 to about 3:1, and wherein the total active monomer concentration in said mix ranges from about 10 to 90%, preferably 20 to 75%, by weight; and

B) adding an effective amount of a free-radical initiator to said aqueous monomer mix, thereby initiating polymerization of said monomer mix and allowing the polymerization reaction to run to completion.

The maleic acid/quaternary ammonium-type polymers prepared in accordance with the present invention are thus made by free-radical polymerization in an aqueous solution, as opposed to by photopolymerization. The instant invention is also directed to polymers prepared using the instant method.

Any ethylenically unsaturated dibasic carboxylic acid or anhydride can be used as monomer a). For example, maleic acid or itaconic acid or their anhydrides can be used. Maleic acid and maleic anhydride are preferred.

Since maleic anhydride groups may be hydrolyzed very readily, for example by heating with water or by neutralizing with alkali, to form free carboxylic acid groups and/or carboxylate salts with possibly some residual anhydride groups, the term "maleic anhydride" as used in this specification includes the groups formed by the hydrolysis of maleic anhydride groups. For this reason, "maleic acid" and "maleic anhydride" are used interchangeably.

The instant polymers are prepared by polymerizing an ethylenically unsaturated dibasic carboxylic acid or anhydride, preferably maleic acid or anhydride, in combination with at least one quaternary dialkyldiallyl ammonium monomer. Any water-soluble dialkyldiallyl ammonium monomer can be used. The preferred monomers are those wherein the alkyl groups, which may be the same or different, are selected from the group consisting of $C_1$-$C_{10}$ alkyls. The most preferred quaternary ammonium dialkyldiallyl ammonium monomers are dimethyldiallyl ammonium chloride (DMDAAC), diethyldiallyl ammonium chloride (DEDAAC), dimethyldiallyl ammonium bromide (DMDAAB) and diethyldiallyl ammonium bromide (DEDAAB). The corresponding iodine salts can also be used.

Other quaternary ammonium salts of diallylamine derivatives, including but not limited to those disclosed in the '693 patent, can also be used as monomers in the instant process. The quaternary ammonium salts of diallylamine derivatives disclosed in the '693 patent are hereby incorporated into this specification by reference.

The mole ratio of the acid or anhydride to the quaternary dialkyldiallyl ammonium monomer in the monomer mix may range from about 1:5 to about 5:1, preferably from about 1:2 to about 3:1. The monomer mix is an aqueous solution or slurry comprising the monomers and water. The total monomer concentration, by weight, in the monomer mix can range from about 10 to about 90%, preferably from about 20 to about 75%.

An effective amount of a free radical initiator is added to the monomer mix, and polymerization proceeds. Any free radical initiator can be used. However, the preferred free radical initiators are persulfate initiators and azo initiators, with persulfate initiators being more preferred; sodium persulfate is the most preferred initiator.

The term "effective amount", as used herein, relates to that amount of initiator required to begin the polymerization reaction. Preferably, about 1 mole % to about 12 mole % of the initiator should be added, based on the total moles of monomer present in the monomer mix. The most preferred mole ratio ranges from about 3 to about 10 mole %, based on the total moles of monomer in the monomer mix. The method by which the initiator is added to the monomer mix is not critical. Preferably,, however, the initiator is added continuously.

Reaction temperature is not critical. Thus, the polymerization reaction may be carried out at any temperature which does not cause thermal destruction of the monomers, monomer mix, or resulting polymers. For example, polymerizations can be carried out at temperatures as high as about 114°C, which is above the boiling point of a typical monomer mix, if a sufficient quantity of sodium chloride is added to the monomer mix to elevate its boiling point.

While high temperatures are preferred since the monomer mix, particularly if maleic anhydride/maleic acid comprises a portion of the monomer mix, becomes more reactive as temperature increases, high temperatures may also promote isomerization. For example, maleic acid may be isomerized to fumaric acid, which is less reactive. Thus, the inventors have found that a preferred temperature range for the instant polymerization process is from about 80°C to about 110°C; the more preferred range is from about 95°C to about 105°C. These preferred ranges render the acid/anhydride component sufficiently reactive, while minimizing isomerization and providing sufficient initiator stability.

In the most preferred case, polymerization is carried out isothermally within the preferred temperature range.

The pH at which polymerization is carried out is not critical. Thus, the inventors have found that maleic acid/dimethyldiallyl ammonium chloride-type polymers can be prepared under highly acidic (i.e., pH less than 1) conditions. However, severe acidic conditions tend to promote isomerization and to inhibit monomer conversion. For this reason, higher pH's are preferred. The preferred pH range is from about 3.0 to about 8.0; the most preferred range is from about 4.0 to about 7.0.

pH adjustment from the extremely acidic conditions of the initial monomer mix to a pH in the preferred range can be accomplished using any neutralizing material. Sodium hydroxide and sodium carbonate are examples of preferred neutralizing agents.

The instant solution polymerization process provides excellent conversion and eliminates problems associated with photopolymerization techniques whereby quaternary ammonium-rich polymers are made.

Other monomers may be added to the monomer mix and polymerized with the acid/anhydride and quaternary ammonium monomers to produce polymers having additional moieties. Examples of such monomers include acrylic acid, acrylamide, sodium allyl sulfonate, allylamine, diallylamine and similar unsaturated vinyl/allyl compounds.

Chain transfer agents may also be added to the monomer mix to produce lower molecular weight polymers. Examples of such chain transfer agents include 2-propanol, fumaric acid and thioglycolic acid

The maleic anhydride quaternary ammonium-type polymers prepared by the process of the present invention have a weight average molecular weight of less than about 50,000, preferably from about 500 to about 10,000. However, due to the ampholytic character of these polymers, the accuracy of molecular weight determination by gel permeation chromotography (gpc) is somewhat uncertain.

The instant polymers have utility as coagulants, dispersants, scale inhibitors and corrosion inhibitors. Other uses for these polymers will be recognized by skilled practitioners.

## EXAMPLES

The following examples are not intended to limit the scope of the instant invention in any way.

## Polymer Preparation

### Examples 1-9

In Examples 1-6, the polymers of these examples were produced by mixing maleic anhydride and dimethyldiallyl ammonium chloride in deionized water at the ratios indicated in Table I. The total concentration of the monomer mix, on an active weight basis, was 38-41 percent. The pH of the monomer mix was adjusted to 6 using sodium carbonate or sodium hydroxide as indicated. Sodium persulfate was used as the initiator at a mole ratio of 4.1-4.2 to 6.3-6.5 mole %, based on total monomers. The initiator solution was fed into the monomer mix over four hours and the reaction was carried out isothermally at the temperature indicated. In Examples 7-8, the pH of the polymer solution was unadjusted. In Example 9, an azo-type initiator (2,2-azobis(2-amidinopropane) hydrochloride) was used. The results of these examples are summarized in Table I.

TABLE I

| Example | MA/DMDAAC | | Initial Monomer Conc.(%) | Neutralizing Agent | pH | Temp. (°C) | Type | % Mole Monomer | Conversion % | | Overall | Molecular Weight |
|---|---|---|---|---|---|---|---|---|---|---|---|---|
| | Mole Ratio | Wt. Ratio | | | | | | | MA | DMDAAC | | |
| 1 | 1/1 | 42/58 | 40 | Na$_2$CO$_3$ | 6.0 | 100 | NAPS | 6.4 | 100 | 97 | 99 | 1,073 |
| 2 | 2/1 | 59/41 | 40 | Na$_2$CO$_3$ | 6.0 | 100 | NAPS | 6.4 | 77 | 85 | 80 | 1,492 |
| 3 | 2.5/1 | 64/36 | 40 | Na$_2$CO$_3$ | 6.0 | 100 | NAPS | 6.4 | 78 | 70 | 76 | 4,438 |
| 4 | 3/1 | 68/32 | 40 | Na$_2$CO$_3$ | 6.0 | 100 | NAPS | 6.4 | 83 | 74 | 81 | - |
| 5 | 2/1 | 59/41 | 40 | Na$_2$CO$_3$ | 6.0 | 100 | NAPS | 9.4 | 96 | 94 | 95 | - |
| 6 | 2/1 | 59/41 | 40 | NaOH | 6.0 | 100 | NAPS | 5.4 | 91 | 88 | 90 | - |
| 7 | 1/1 | 42/58 | 40 | - | 1.0 | 105 | NAPS | 4.2 | 83 | 96 | 90 | - |
| 8 | 2/1 | 59/41 | 38 | - | 1.0 | 101 | NAPS | 4.1 | 68 | 93 | 76 | 2,046 |
| 9 | 2/1 | 59/41 | 41 | Na$_2$CO$_3$ | 6.0 | 100 | V-50 | 3.6 | 59 | 60 | 60 | - |

MA:maleic acid, hydrolyzed from maleic anhydride DMDAAC:dimethyldiallyl ammonium chloride
Molecular weight:weight average molecular weight determined by gel permeation chromatography using polyDMDAAC as a standard
NAPS:sodium persulfate
V-50:2,2-azobis (2-amidinopropane) hydrochloride

EP 0 344 841 A2

Comparison Examples 10-26

Examples 45 and 46 of U.S. Pat. 3,912,693 describe the preparation of MA/DMDAAC copolymers having MA:DMDAAC mole ratios ranging from 0.05:1 to 1:1. These copolymers were prepared at an initial monomer concentration of 87-98%. Maleic anhydride and dry DMDAAC monomer were mixed with 5% water, and the resulting slurry, 4-5 mm thick, was placed in a polyethylene bag, set on a glass plate, and irradiated for 20-48 hours using four special emission, fluorescent bulbs placed above and below the glass plate. The emission spectrum of the special fluorescent bulbs used is given in the '693 patent. In example 46, a sensitizer, benzophenone/dioxane, was added to the monomer slurry to reduce the polymerization time to 20 hours.

Under these conditions, the following results were reported in the '693 patent:

TABLE II

| '693 Patent Example No. | Maleic Acid:DMDAAC Mole Ratio | Initial Monomer Concentration (Based on Maleic Acid) | Irradiation Time (hrs) | Sensitizer (Yes/No) | Yield (%) |
|---|---|---|---|---|---|
| 45 | 1:1 | 87 | 25 | N | 35.1 |
| 45 | 1:2 | 91 | 25 | N | 91.2 |
| 45 | 1:2 | 91 | 48 | N | 100 |
| 46 | 1:1 | 94 | 20 | Y | 100 |
| 46 | 1:2 | 98 | 20 | Y | 98.4 |

These experiments were duplicated by the inventors to compare the polymerization technique of the '693 patent with the instant process. The following procedure was used.

1. Monomer preparation:

Dry DMDAAC monomer was prepared from aqueous DMDAAC monomer by azeotropic distillation with toluene or isopropanol followed by chloroform and then methanol. Traces of these solvents were removed by vacuum distillation at room temperature immediately prior to use of the monomer.

Maleic anhydride briquettes from Aldrich Chemical Co. were ground to a fine powder with a mortar and pestle immediately prior to use.

2. Monomer Mix Preparation:

The monomer slurry was prepared in a 50 X 100 mm glass evaporating dish. Distilled water was added to give the desired slurry consistency. The slurry film thickness was 4-5 mm and the slurry was covered with a clear plastic film. The initial monomer concentration was 87-98%, which resulted in a paste-like slurry of essentially two solid materials.

3. Irradiation:

The sample dishes containing the monomer mix were irradiated from 2-14 days at a temperature of 30-35°C with different light sources in an effort to simulate the experimental conditions described in the '693 patent and to achieve high monomer conversions.

An apparatus similar to the one described in the '693 patent for irradiating the monomer samples from above and below was constructed. GE "Cool White" fluorescent bulbs and Phillips blue/black fluorescent bulbs were used in this apparatus as light sources. The emission spectrum of the GE "Cool White" bulb falls within the preferred 150-500nm range specified in the patent, while the Phillips blue/black bulb matches the emission characteristics of the most preferred light source. A fluorescent desk lamp and a mercury arc UV lamp were also used as light sources. These last two light sources were disclosed in the patent as being suitable for carrying out this photopolymerization.

4. Analytical Techniques:

Residual monomer:

Residual maleic acid and DMDAAC monomers were determined by proton NMR.

Polymer structure:

Polymer structure for selected samples was examined using $^{13}C$ NMR.

5. Results:

A summary of the data for residual monomers and monomer conversions under various experimental conditions is given in Table III.

A. Monomer Conversion:

1. Effect of light source:

Under the experimental conditions explicitly· described in the patent, no significant differences in monomer conversions for MA:DMDAAC compositions from 1:2 to 2:1 mole ratio were found using either the GE "Cool White" fluorescent bulbs or the Phillips blue/black fluorescent bulbs (Table IV).

2. Comparison of photopolymerization yields with '693 patent data and the instant process yields:

The average, overall monomer conversions obtained for polymer compositions prepared using the '693 polymerization process were considerably lower than the yields reported in the '693 patent (Table V). No monomer conversion data was provided in the patent for a 2:1 MA/DMDAAC composition. Since monomer conversions obtained for the 2:1 compositions using the '693 process were so poor, it is concluded that 2:1 MA/DMDAAC polymers cannot be prepared by the '693 process.

By contrast, the instant solution polymerization process for MA/DMDAAC-type polymers yields high conversions for MA/DMDAAC compositions ranging up to at least 3:1 (Table VI).

B. Polymer Structure

Analytical information obtained relative to polymers prepared via the '693 method contradicts the analytical information reported in the '693 patent in support of the contention that the photopolymerization process yields high conversion copolymers of MA and DMDAAC. The '693 patent reports that copolymer formation was analyzed based on IR analysis of an acetone precipitated material. The '693 patent reports that the "IR spectra of these polymers show the same absorption bands as those of the polymer of DMDAAC and a sharp absorption band due to a carbonyl group at near 1720 cm, intensity of which increased with an increase of the proportion of maleic anhydride in the starting mixture. These results suggest (emphasis added) that the obtained polymers are linear high polymeric amphoteric electrolytes...".

Based on the IR spectral data cited in the '693 patent, the instant inventors have concluded that one could not reliably distinguish between a copolymer of MA and DMDAAC, a mixture of homopolymers, or a mixture of residual monomers and polymers.

The $^1H$ and $^{13}C$ NMR techniques employed by the instant inventors to analyze the polymers formed by the '693 photopolymerization process clearly discriminate between residual maleic acid and DMDAAC

7

monomers, DMDAAC homopolymer or DMDAAC-rich copolymer, and MA/DMDAAC copolymer in a mixture of these species. This $^{13}$C NMR technique does not reliably discriminate between maleic acid homopolymer and MA/DMDAAC copolymer since the spectral absorbance characteristics of these species overlap.

$^{13}$C NMR spectra of the MA/DMDAAC polymers prepared by the '693 photopolymerization and instant processes show dramatic differences in the polymeric species formed. Polymerization of maleic acid and DMDAAC monomers at a 1:1 mole ratio via the instant process yields a high conversion copolymer with no significant amount of DMDAAC homopolymer or DMDAAC-rich copolymer. By contrast, the '693 photopolymerization process yields significant amounts of DMDAAC homopolymer and/or DMDAAC-rich copolymer. This spectral observation is also supported by the ratios of average monomer conversions for maleic acid and DMDAAC monomers shown in Table IV.

Based on the ratio of average monomer conversions for maleic acid and DMDAAC monomer using the '693 photopolymerization process, these data also indicate that for a charged mole ratio of 1:1 MA:DMDAAC, a copolymer of composition no greater than 1:1.4 is expected. Also, some polyDMDAAC is formed at this charged composition.

The monomer conversions for Example 17 (Table III) appear to contradict this conclusion. A 2:1 MA:DMDAAC polymer composition is implied by the respective monomer conversions and from the presence of DMDAAC homopolymer or DMDAAC-rich copolymer in its $^{13}$C NMR spectrum. However, the carbonyl region of the $^{13}$C NMR spectrum of this sample strongly suggests that the polymer present is very similar to the DMDAAC-rich copolymer present in other low conversion, photopolymerized samples. In addition, the fact that insignificant amounts of polymer are formed from an initial monomer mix ratio of 2:1 MA:DMDAAC make it highly unlikely that a copolymer of 2:1 MA/DMDAAC composition would be formed under these conditions.

Finally, to achieve high monomer conversion by photopolymerization for a 1:1 MA:DMDAAC composition, the monomer mix must be blanketed with nitrogen and irradiated with UV light (mercury arc lamp) over an extended period of time (Example 22, Table III). Even under these conditions, significant amounts of DMDAAC homopolymer and/or DMDAAC-rich copolymer were formed. However, these experimental conditions are not described in the '693 patent.

TABLE III

| Example # | MA/DMDAAC Mole Ratio | Weight Ratio | % Initial Concentration Based on Maleic Acid | Sensitizer+ (Yes/No) | Irradiation Time (Days) | Light Source (A,B,C,D)* | N₂ Blanket (Yes/No) | Residual Maleic Acid (wt %) | Residual Fumaric Acid (wt %) | Maleic Acid Conversion (%) | Residual DMDAAC (wt %) | DMDAAC Conversion (%) | Overall Conversion (%) | '693 Patent Conversion Claim (%) |
|---|---|---|---|---|---|---|---|---|---|---|---|---|---|---|
| 10 | - | 0/100 | 95 | N | 2 | B | N | - | - | - | 60 | 37 | 37 | 89.4 |
| 11 | - | 0/100 | 95 | N | 7 | B | N | - | - | - | 68 | 28 | 28 | 89.4 |
| 12 | - | 0/100 | 95 | N | 5 | C | Y | - | - | - | 50 | 47 | 47 | 89.4 |
| 13 | 1/2 | 26/74 | 84 | Y | 5 | A | N | 16 | - | 38 | 44 | 41 | 40 | 98.4 |
| 14 | 1/2 | 26/74 | 98 | Y | 7 | B | N | 29 | - | < 1 | 49 | 34 | 11 | 98.4 |
| 15 | 1/2 | 26/74 | 98** | Y | 5 | C | Y | 16 | - | < 1 | 21 | 41 | 27 | 98.4 |
| 16 | 1/1 | 42/58 | 89 | N | 2 | B | N | 38 | 2 | 5 | 59 | 1 | 3 | 35.1 |
| 17 | 1/1 | 42/58 | 94 | Y | 5 | A | N | 28 | - | 33 | 48 | 17 | 25 | 100 |
| 18 | 1/1 | 42/58 | 94 | Y | 2 | B | N | 37 | - | 12 | 45 | 22 | 17 | 100 |
| 19 | 1/1 | 42/58 | 94 | Y | 7 | B | N | 35 | - | 17 | 41 | 29 | 23 | 100 |
| 20 | 1/1 | 42/58 | 94 | Y (10X) | 7 | B | N | 41 | - | 2 | 47 | 19 | 10 | 100 |
| 21 | 1/1 | 42/58 | 94 | Y | 5 | C | Y | 37 | 3 | 5 | 41 | 29 | 17 | 100 |
| 22 | 1/1 | 42/58 | 94 | Y | 14 | D | Y | 12 | 1 | 69 | 19 | 67 | 68 | } |
| 23 | 2/1 | 59/41 | 92 | N | 2 | B | N | 57 | 4 | < 1 | 38 | 7 | 2 | } |
| 24 | 2/1 | 59/41 | 97 | Y | 2 | B | N | 56 | - | 5 | 42 | 1 | 3 | } No |
| 25 | 2/1 | 59/41 | 97 | Y (10X) | 7 | B | N | 59 | - | < 1 | 25 | 39 | 13 | } Examples |
| 26 | 2/1 | 59/41 | 97 | Y | 5 | C | Y | 49 | 2.5 | 13 | 35 | 15 | 14 | } |

\* Light source:   A - desk lamp with 2-2ft. fluorescent bulbs
B - 4-2ft. GE "Cool-White" fluorescent bulbs
C - 2-5ft. Phillips TL/140W/03RB fluorescent bulbs
D - Mercury arc, UV lamp
\*\* diluted to 47.8% solids before residual monomer determination
+ The sensitizer used was 21.4% benzophenone dissolved in dioxane at a dosage of 0.93% in the reaction mixture.
("10X" refers to a 10-fole increase in sensitizer dosage.)

EP 0 344 841 A2

TABLE IV

| MA/DMDAAC Composition | Sensitizer (Y/N) | Avg. MA Conversion w/cool White (%) | Avg. MA Conversion w/Phillips Bulb (%) | Avg. DMDAAC Conversion w/Cool White (%) | DMDAAC Conversion w/Phillips Bulb |
|---|---|---|---|---|---|
| 1/2 | Y | 19 | < 1 | 38 | 41 |
| 1/1 | Y | 16 | 5 | 22 | 29 |
| 2/1 | Y | 3 | 13 | 20 | 15 |

TABLE V

| Composition | # of Samples Prepared | Overall Monomer Conversions Using the Photopolymerization Process | |
| --- | --- | --- | --- |
| | | Calgon Average | '693 Patent Claim |
| p-DMDAAC | 3 | 37 | 89.4 |
| 1/2 MA/DMDAAC | 3 | 26 | 98.4 |
| 1/1 MA/DMDAAC | 5 | 18 | 100 |
| 2/1 MA/DMDAAC | 4 | 8 | no examples |

TABLE VI

| Composition | Overall Monomer Conversion Using the Instant Process |
| --- | --- |
| 1/1 MA/DMDAAC | 99 |
| 2/1 MA/DMDAAC | 88 |
| 2.5/1 MA/DMDAAC | 76 |
| 3/1 MA/DMDAAC | 81 |

**Claims**

1. A solution polymerization process for preparing quaternary ammonium ethylenically unsaturated dibasic carboxylic acid polymers comprising the steps of:

A) preparing an aqueous monomer mix which comprises: a) an ethylenically unsaturated dibasic carboxylic acid or anhydride; and b) at least one quaternary dialkyldiallyl ammonium monomer; wherein the mole ratio of a):b) ranges from about 1:5 to about 5:1 and wherein the total active monomer concentration in said mix ranges from about 10% to about 90%, by weight; and

B) adding an effective amount of a free-radical initiator to said aqueous monomer mix, thereby initiating polymerization of said monomer mix and allowing the polymerization reaction to run to completion.

2. The process of Claim 1, wherein said mole ratio of a):b) ranges from about 1:2 to about 3:1.

3. The process of Claim 2, wherein said total active monomer concentration ranges from about 20% to 75%, by weight.

4. The process of Claim 1, wherein a) is maleic acid or anhydride and b) is dimethyldiallyl ammonium chloride or a homologue thereof.

5. The process of Claim 4, wherein b) is dimethyldiallyl ammonium chloride.

6. The process of Claim 3, wherein a) is maleic acid or anhydride and b) is dimethyldiallyl ammonium chloride or a homologue thereof.

7. The process of Claim 6, wherein b) is dimethyldiallyl ammonium chloride.

8. A polymer prepared according to the process of Claim 1.

9. A polymer comprising maleic acid or anhydride and dimethyldiallyl ammonium chloride, wherein the mole ratio of maleic acid or anhydride:dimethyldiallyl ammonium chloride ranges from about 2:1 to about 3:1.